Europäisches Patentamt

European Patent Office

Office européen des brevets

(19)

(11) Veröffentlichungsnummer: **0 254 897**
**B1**

(12) **EUROPÄISCHE PATENTSCHRIFT**

(45) Veröffentlichungstag der Patentschrift:
**10.01.90**

(51) Int. Cl.⁴: **F16H 25/08, B41J 23/18,**
**B41F 21/05**

(21) Anmeldenummer: **87109493.4**

(22) Anmeldetag: **02.07.87**

(54) Getriebe zur Bildung einer zyklisch ablaufenden Bewegung aus einer Rotationsbewegung.

(30) Priorität: **01.08.86 DE 3626185**

(43) Veröffentlichungstag der Anmeldung:
**03.02.88 Patentblatt 88/5**

(45) Bekanntmachung des Hinweises auf die Patenterteilung:
**10.01.90 Patentblatt 90/2**

(84) Benannte Vertragsstaaten:
**CH DE FR GB IT LI NL SE**

(56) Entgegenhaltungen:
**DE-A- 3 333 050**
**DE-A- 3 417 080**
**DE-C- 677 130**

(73) Patentinhaber: **Heidelberger Druckmaschinen Aktiengesellschaft,**
**Kurfürsten-Anlage 52-60 Postfach 10 29 40,**
**D-6900 Heidelberg 1(DE)**

(72) Erfinder: **Thünker, Norbert, Schillerstrasse 6a,**
**D-6945 Grosssachsen(DE)**
Erfinder: **Spiegel, Nikolaus, Dantestrasse 13,**
**D-6909 Walldorf(DE)**
Erfinder: **Lorenz, Roland, Albert-Mays-Strasse 12,**
**D-6900 Heidelberg(DE)**
Erfinder: **Joss, Werner, Robert-Koch-Strasse 2,**
**D-7515 Linkenheim(DE)**

(74) Vertreter: **Stoltenberg, Baldo Heinz-Herbert, c/o**
**Heidelberger Druckmaschinen AG**
**Kurfürsten-Anlage 52-60, D-6900 Heidelberg 1(DE)**

ACTORUM AG

**Beschreibung**

Die Erfindung betrifft ein Getriebe zur Bildung einer zyklisch ablaufenden Bewegung aus einer Rotationsbewegung, bestehend aus einem rotierenden Teil, wenigstens einem durch die Rotationsbewegung in zyklische Bewegung versetzten Steuerhebel, der kraft- oder formschlüssig mit dem rotierenden Teil zusammenarbeitet, wobei auf den Steuerhebel eine ungleichförmige Kraft einwirkt, die eine Drehmomentschwankung in der Rotationsbewegung erzeugt.

Ein solches Getriebe ist aus der DE-A 3 333 050 bekannt. Das rotierende Teil ist hier eine Kurvenscheibe, auf welcher ein Steuerhebel über eine an dem Steuerhebel drehbar gelagerten Rolle abrollt. Die genannte Anordnung dient als Vorgreifersteuerung für Bogendruckmaschinen, wobei der Steuerhebel aufgrund der Form der Kurvenscheibe eine zyklische Bewegung ausführt, die zur Bildung einer Schwenkbewegung der Vorgreifer dient. Damit der Steuerhebel an der Kurvenscheibe kontinuierlich anliegt, stützt sich dieser auf einer Beiläuferkurve ab, die parallel zu der Kurvenscheibe angeordnet ist, und die im festen Drehzahlverhältnis mit der Kurvenscheibe umläuft. Die Abstützung erfolgt dabei unter Zwischenschaltung von Federelementen, deren Federkraft so bemessen ist, daß auch bei großen Drehzahlen der Steuerhebel sicher an der Kurvenscheibe anliegt.

Es ist auch bekannt, anstelle einer Beiläuferkurve und einer federnd gelagerten zweiten Kurvenrolle eine Feder direkt auf den Steuerhebel oder auf eine dem Steuerhebel nachgeordnete Gelenkanordnung, derart einwirken zu lassen, daß ein Abheben des Steuerhebels auf der Kurvenscheibe vermieden wird.

Auch hier besteht die Forderung, die Feder so auszulegen, daß auch bei hohen Maschinengeschwindigkeiten eine sichere Funktion gewährleistet ist, d.h., der Steuerhebel ständig in Kontakt mit der Kurvenscheibe bleibt. Die Einwirkung der Federkräfte der genannten Federn auf die Kurvenscheibe erzeugt jedoch Drehmomente um die die Kurvenscheibe tragende Welle. Diese Drehmomente sind je nach Kurvenform und Federkraft unterschiedlich hoch und können sowohl in Drehrichtung als auch gegen die Drehrichtung wirken. Diese Drehmomente überlagern sich dem Drehmoment des Antriebsmotors und erzeugen somit Drehmomentschwankungen, die sich auf die gesamte Maschine auswirken und unter Umständen Schwingungen in dem Maschinengestell oder den sich drehenden Teilen anregen. Solche Drehmomentschwankungen können jedoch nicht nur von Federn verursacht werden, sondern auch von Massen, die durch den Steuerhebel in zyklische Bewegungen versetzt werden. Aufgrund der ungleichförmigen Bewegung der Massen werden Beschleunigungskräfte erzeugt, die auf die Kurvenscheibe rückwirken.

Der Erfindung liegt die Aufgabe zugrunde, Drehmomentschwankungen, die aufgrund der Erzeugung zyklischer Bewegungen aus Rotationsbewegungen entstehen, zu kompensieren.

Diese Aufgabe wird dadurch gelöst, daß an dem rotierenden Teil eine Kurvenscheibe angeordnet ist, und der Steuerhebel mit Rolle federbelastet eine Abrollbewegung auf der Kurvenscheibe ausführt und zur Kompensation der Drehmomentschwankungen eine weitere Kurvenscheibe an dem rotierenden Teil oder dem weiteren Teil angeordnet ist, auf der ein weiterer Steuerhebel mit einer Rolle abrollt, welche mittels einer Feder mit einer Kraft beaufschlagt ist, wobei die Kurvenform der zweiten Kurvenscheibe bezogen auf die Kurvenform der ersten Kurvenscheibe so gewählt ist, daß die auf das rotierende Teil einwirkenden Drehmomente gegenphasig sind.

Die erfindungsgemäße Einrichtung kann so ausgeführt werden, daß eine exakte Kompensation der Drehmomentschwankungen erfolgt, und somit die aus der Rotationsbewegung gebildete zyklische Bewegung rückwirkungsfrei ist, und damit ein ruhiger Maschinenlauf gewährleistet wird.

Ein Vorteil der Erfindung ist darin zu sehen, daß die Einrichtung, d.h. die Feder zur Erzeugung der Kompensationskraft nicht unmittelbar auf das rotierende Teil einwirken muß, sondern auch an einem weiteren Teil, beispielsweise einem mit dem rotierenden Teil in Zahneingriff stehenden Rad die Krafteinleitung möglich ist. Dieses Rad kann auch beispielsweise mit, gegenüber der Drehzahl des rotierenden Teils, halber Drehzahl rotieren. In diesem Fall muß die zyklische Bewegung der Einrichtung mit doppelter Frequenz ablaufen.

Es ist selbstverständlich möglich, die Kurvenscheiben in eine rotierende Bewegung zu versetzten und die Steuerhebel stationär anzuordnen ebenso wie die Kurvenscheiben feststehend auszubilden und die Steuerhebel um die Kurvenscheiben rotieren zu lassen. Außerdem ist auch die Anordnung einer feststehenden und einer rotierenden Kurvenscheibe mit entsprechend zugeordneten Steuerhebeln möglich.

Ein Vorteil der Erfindung besteht auch darin, daß die Feder der genannten Einrichtung auch in der Lage ist, Drehmomentschwankungen zu kompensieren, die aufgrund beschleunigter Massen entstehen. Beschleunigte Massen sind beispielsweise dem Steuerhebel nachgeordnete Gelenkanordnungen oder die die zyklische Bewegungen ausführenden Organe. Die Drehmomentschwankungen, die aufgrund dieser Massen entstehen, können in einfacher Weise bei einer bestimmten Drehzahl ermittelt, und aus dem Verlauf des Drehmoments die Kurvenform gestaltet werden. Die Erfindung ermöglicht die Bildung einer einzigen Kurvenform zur Kompensation, sowohl der durch Federkräfte als auch der Kräfte aufgrund der beschleunigten Massen entstehenden Momentschwankungen. Selbtverständlich ist es aber auch möglich, die verschiedenartig erzeugten Drehmomentschwankungen mit mehreren Kompensationseinrichtungen getrennt zu kompensieren.

Die Erfindung ist in vorteilhafter Weise anwendbar an der Greifertrommel einer Druckmaschine. Die Bewegung einer auf einer Greifertrommel angeordneten Greiferbrücke ist eine hin- und herschwingende Bewegung, die üblicherweise über eine Kurvenscheibe erzeugt wird. Ebenso erfolgt die Greifbewegung selbst über eine Kurvenscheibe. Mit starken Rückholfedern wird der Steuerhebel, der mit der Greiferbrücke verbunden ist, an die Kurvenscheibe angedrückt, um bei hohen Maschinendrehzahlen ein Abheben der Rolle des Steuerhebels auf der Kurvenscheibe zu vermeiden.

Weitere vorteilhafte Ausgestaltungen der Erfindung ergeben sich aus den Unteransprüchen und der Beschreibung.

Die Erfindung wird nachfolgend anhand von Ausführungsbeispielen näher erläutert.

Es zeigt:

Fig. 1 Eine Antriebsvorrichtung zur Erzeugung einer Schwingbewegung mit Drehmomentkompensation,

Fig. 2 die in Fig. 1 dargestellte Antriebsvorrichtung in Schnittdarstellung,

Fig. 3 eine Antriebsvorrichtung für einen Vorgreifer einer Bogendruckmaschine,

Fig.4 ein Diagramm zur Darstellung der Momentenkompensation.

Gleiche Teile sind mit gleichen Bezugsziffern versehen.

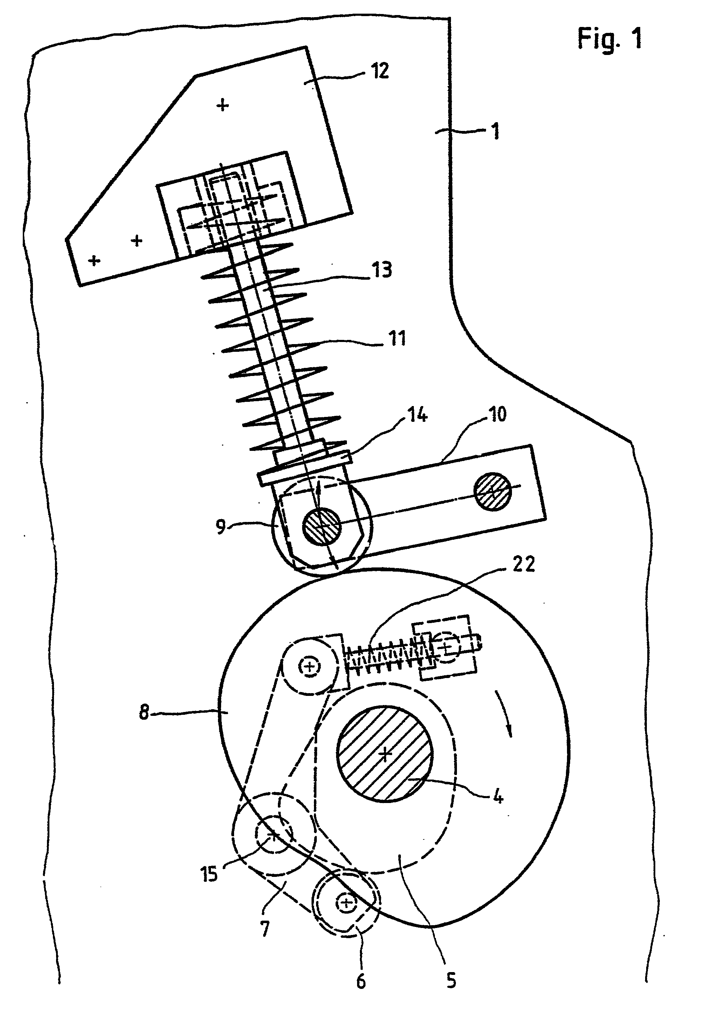

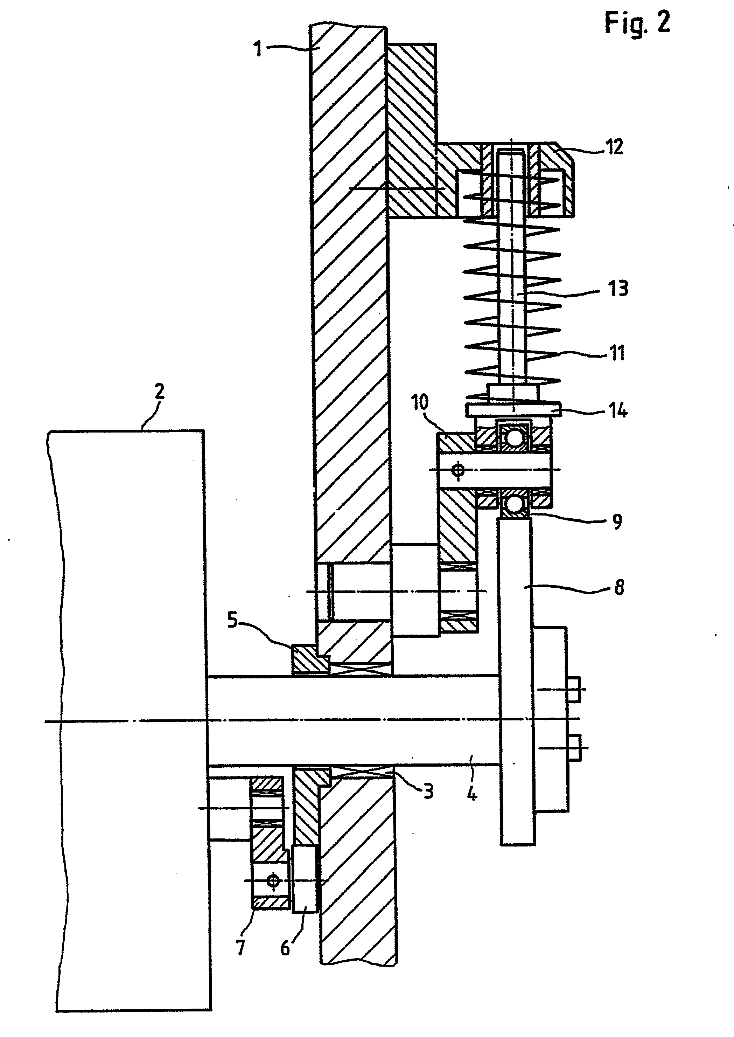

Die Antriebsvorrichtung zur Erzeugung einer Schwingbewegung gemäß den Fig. 1 und 2 ist an einer Trommel 2 angeordnet, die in einer Gestellwand 1 über Lager 3 drehbar befestigt ist. Diese Trommel wird beispielsweise durch einen Motor an ihrem hier nicht dargestelltem anderen Ende in Rotation versetzt. An der Gestellwand 1 ist konzentrisch zu der Welle 4, der Trommel 2, eine Kurvenscheibe 5, befestigt. Diese Kurvenscheibe 5 ist starr mit der Gestellwand 1 verbunden und weist in ihrer Mitte eine Bohrung auf, so daß zwischen der Welle 4 und der Kurvenscheibe 5 ein Luftspalt entsteht. Auf der Kurvenscheibe 5 läuft eine Rolle 6 ab, die über einen Rollenhebel 7 an der Trommel befestigt ist. Eine Feder 22, innerhalb der Trommel 2, bewirkt eine Anpreßkraft zwischen der Rolle 6 und der Kurvenscheibe 5, die so hoch bemessen ist,daß auch bei höheren Drehzahlen der Trommel ein Abheben der Rolle von der Kurvenscheibe vermieden wird. Aufgrund der Form der Kurvenscheibe führt der Rollenhebel 7 um die Drehachse 15 eine Schwenkbewegung aus. Diese Bwegung kann beispielsweise bestimmte Elemente innerhalb der Trommel steuern. Die von der Druckfeder 22 erzeugte Anpreßkraft wirkt jedoch nicht nur zum Zentrum der Kurvenscheibe hin, sondern erzeugt auch je nach Kurvenform mehr oder weniger große Drehmomente in Umfangsrichtung. Diese Momente überlagern sich dem Antriebsmoment sowohl in positiver als auch in negativer Richtung. Zur Kompensation dieser überlagerten Momente ist auf der Welle 4 eine Kurvenscheibe 8 vorgesehen. Diese Kurvenscheibe 8 dreht sich somit mit der Trommel 2. Eine Rolle 9 läuft auf dieser Kurvenscheibe ab und ist über den Schwenkhebel 10 an der Gestellwand 1 gelagert. Mittels einer Feder 11 wird die Rolle 9 mit einer Kraft beaufschlagt, die ebenfalls ein Anpressen der Rolle 9 an die Kurvenscheibe 8 bewirkt. Die Feder 11 stützt sich rollenseitig an einen Aufnahmeteil 14 ab, welches mit dem Schwenkhebel 10 verbunden ist. An der gegenüberliegenden Seite liegt diese Feder an einem Stützlager 12 auf. Ein Führungsstift 13 zwischen Stützlager 12 und Aufnahmeteil 14 verhindert ein Kippen der Feder 11. Die Kurvenform der Kurvenscheibe 8 ist so gewählt, daß die Drehmomente, die aufgrund der Federkraft der Feder 11 entstehen, den Drehmomenten die aufgrund der Anpreßkraft der Rolle 6 an die Kurvenscheibe 5 entstehen, in ihrer Größe entsprechen aber gegengerichtet sind. Somit werden dem Antriebsmoment keine schwankenden Drehmomente mehr überlagert. Lediglich die geringen konstanten Reibungsmomente sind zusätzlich zu den Abtriebsmomenten zu überwinden.

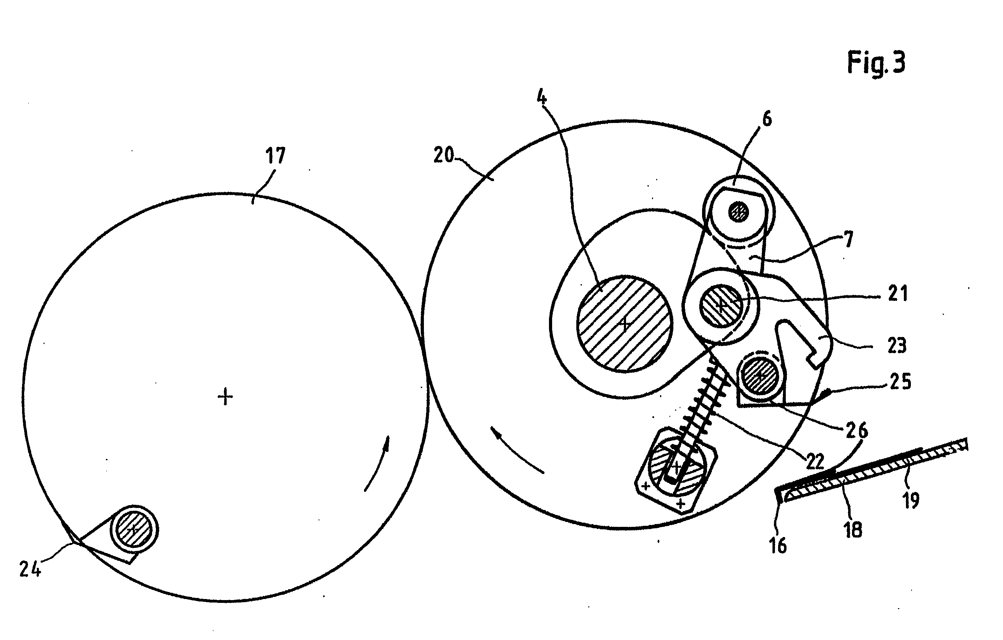

In Fig. 3 ist eine schematische Darstellung einer Antriebsvorrichtung gezeigt, wie sie für einen Vorgreifer einer Bogendruckmaschine zur Anwendung kommt. Wie beispielsweise aus der Literaturstelle "Heidelberger Nachrichten 4/36" der Firma Heidelberger Druckmaschinen Aktiengesellschaft bekannt, wird ein Papierbogen, der von einem Stapel entnommen wurde und der Druckmaschine zugeführt werden soll, nach genauer Lageausrichtung aus dem Stillstand auf Druckgeschwindigkeit gebracht und an die Greifer eines Druckzylinders übergeben. Hierzu ist eine Registeranlegetrommel vorgesehen, die mit der Druckmaschinengeschwindigkeit umläuft. In dieser Trommel befindet sich eine relativ zu der Trommelgeschwindigkeit bewegbare Greiferbrücke, die während der Übernahme des Papierbogens einer der Drehbewegung der Registeranlegtrommel entgegengerichtete Bewegung ausführt und somit stillsteht. Die Greiferbrücke paßt sich anschließend der Geschwindigkeit der Registeranlegetrommel an. Dadurch wird der Bogen langsam auf Druckgeschwindigkeit beschleunigt und bei Gleichlauf von Greiferbrücke und Druckzylinder an den Druckzylinder übergeben. Die Bewegung der Greiferbrücke wird über eine Kurvenscheibe gesteuert.

Der Aufbau zur Steuerung der Greiferbrücke wird nachfolgend gemäß Fig. 3 beschrieben. Innerhalb einer sich drehenden Registeranlegetrommel 20 befindet sich ein Rollenhebel 7, der an einem in der Registeranlegetrommel 2o angeordneten Schwenklager 21 schwenkbar gelagert ist. Der Rollenhebel 7 weist an seinem einen Ende eine Rolle 6 auf, diese Rolle 6 läuft entlang der feststehenden Kurvenscheibe 5. Das andere Ende des Rollenhebels 7 ist mit der Greiferbrücke 23 verbunden. Diese Greiferbrücke ist über das Schwenklager 21 drehbar an der Registeranlegetrommel 20 angeordnet. Die Greiferbrücke 23 wird über die Druckfeder 22 mit einer Kraft beaufschlagt, die eine Anlage der Rolle 6 an der Kurvenscheibe 5 bewirkt. Aufgrund der Drehbewegung der Registeranlegetrommel gelangt die Greiferbrücke 23 bzw. die daran angeordneten Greifer 25 an den über einen Anlegetisch 18 zugeführten Papierbogen 19. Der Papierbogen 19 befindet sich mit seiner Vorderkante an einem Anschlag 16 und wird von der Greiferbrücke bei gleichzeitigem Wegkippen des Anschlags 16 übernommen, d.h. durch Schwenken des Kipphebels 26 wird der Papierbogen an seiner Vorderkante erfaßt und bis zur Übergabe an die Greifer 24 des Druckzylinders 17 von der Registeranlegetrommel 20 mitgeführt. Die Drehmomentschwankungen, die aufgrund
der Bewegungen der Greiferbrücke über die, auf
der Kurvenscheibe 5 sich abstützenden Rolle 6,
dem Antriebsmoment der Registeranlegetrommel
überlagert werden, können entsprechend der in
Fig. 1 und 2 gezeigten Drehmomentkompensationsanordnung durch Hinzufügen einer hier nicht dargestellten Kurvenscheibe mit einer federbelasteten
Rolle, die einen entsprechenden Momentenverlauf
erzeugt, genau kompensiert werden. Zur Bestimmung der Kurvenform für die Drehmomentkompensation können beispielsweise über ein Drehmomentmeßgerät die Drehmomentschwankungen, die durch
die Greiferbrückenanordnung entstehen, gemessen und aus dem so gemessenen Momentenverlauf
die Federkraft und die Kurvenform der Kompensationseinrichtung berechnet werden.

Die Kompensationseinrichtung ermöglicht nicht
nur eine Kompensation von Drehmomentschwankungen die durch bestimmte Kurvenformen entstehen,
sondern ist auch in der Lage, Drehmomentschwankungen, die aufgrund beschleunigter Massen hervorgerufen werden zu kompensieren.

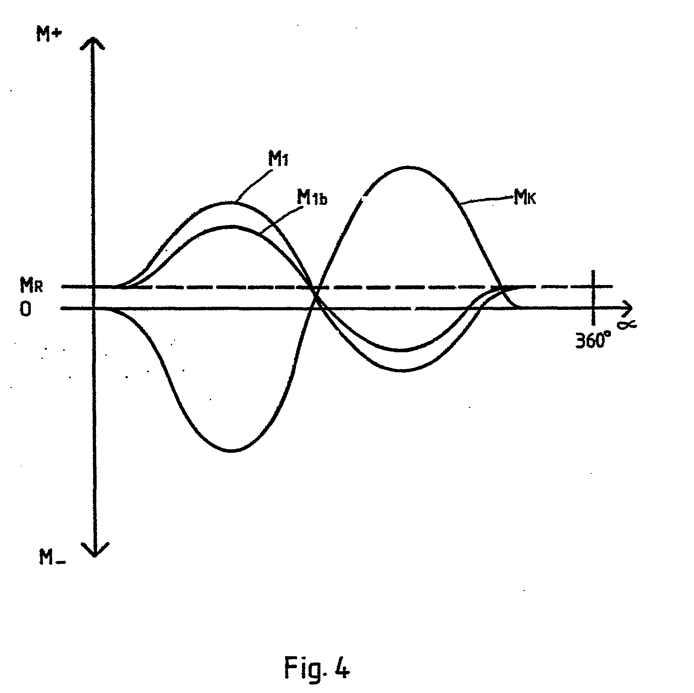

Fig.4 zeigt eine solche Überlagerung von
Drehmomentschwankungen. Auf der Ordinate dieser Figur ist ein Drehmoment aufgetragen. Die Abszisse zeigt einen Drehwinkel über eine volle Umdrehung eines rotierenden Körpers. Mit M1 ist eine
Drehmomentschwankung bezeichnet, die aufgrund
einer federbelasteten Rolle an einer Kurve hervorgerufen wird. Der Drehmomentschwankung ist ein
konstantes Moment unterlagert, welches beispielsweise durch Reibungskräfte hervorgerufen wird.
Ein Moment M1b wird durch eine beschleunigte und
verzögerte Masse hervorgerufen, das ebenfalls
auf das rotierende Teil einwirkt. Zur Kompensation
dieser beiden Momente M1 und M1b wird an dem rotierenden Teil eine Kurve mit einem Kurvenverlauf
angeordnet, der unter Einwirkung einer federbelasteten Rolle ein Drehmoment gemäß der Kurve MK
auf das rotierende Teil erzeugt. Der Drehmomentverlauf MK entspricht der Überlagerung der beiden Momente M1 und M1b.

Wesentlicher Vorteil der Drehmomentkompensation ist, neben einer Verringerung des maximalen
Antriebsmomentes, eine Vermeidung von Torsionsschwingungen die in den, zwischen Antriebsmotor
und rotierenden Teil, durch welches die Drehmomentschwankungen eingeleitet werden, liegenden
angetriebenen Teilen auftreten können. Diese Torsionsschwingungen führen unter Umständen zu einer Anregung von Schwingungen an der gesamten
Maschine, welche nunmehr durch den einfachen
Einbau der genannten Kompensationseinrichtung
vermieden werden.

Die Figuren 1 und 2 zeigen ein Ausführungsbeispiel, bei dem eine Kurvenscheibe feststeht und die
Kurvenscheibe zur Kompensation der Drehmomentschwankungn drehbar gelagert ist. Selbstverständlich ist es auch möglich beide Kurvenscheiben drehbar und die Rollen gestellfest anzuordnen, wie auch
umgekehrt die Kurvenscheiben feststehend und die
Rollen drehbar anzuordnen.

**Patentansprüche**

1. Getriebe zur Bildung einer zyklisch ablaufenden Bewegung aus einer Rotationsbewegung, bestehend aus einem rotierenden Teil (2), wenigstens einem durch die Rotationsbewegung in zyklische Bewegung versetzten Steuerhebel (7), der kraft- oder
formschlüssig mit dem rotierenden Teil (2) zusammenarbeitet, wobei auf den Steuerhebel (7) eine ungleichförmige Kaft einwirkt, die eine Drehmomentschwankung in der Rotationsbewegung erzeugt, dadurch gekennzeichnet, daß an dem rotierenden Teil
(2) eine Kurvenscheibe (5) angeordnet ist, und der
Steuerhebel (7) mit Rolle (6) federbelastet eine Abrollbewegung auf der Kurvenscheibe (5) ausführt
und zur Kompensation der Drehmomentschwankungen eine weitere Kurvenscheibe (8) an dem rotierenden Teil (2) oder dem weiteren Teil angeordnet ist,
auf der ein weiterer Steuerhebel (10) mit einer Rolle
(9) abrollt, welche mittels einer Feder (11) mit einer
Kraft beaufschlagt ist, wobei die Kurvenform der
zweiten Kurvenscheibe (8) bezogen auf die Kurvenform der ersten Kurvenscheibe (5) so gewählt ist,
daß die auf das rotierende Teil (2) einwirkenden
Drehmomente, gegenphasig sind.

2. Getriebe nach Anspruch 1, dadurch gekennzeichnet, daß die Feder (11) zur Kompensation der
Drehmomentschwankungen aufgrund der ungleichförmig wirkenden Kraft und für einen bestimmten
Drehzahlbereich aufgrund der ungleichförmig bewegten Massen vorgesehen ist.

3. Getriebe nach Anspruch 1 oder 2, gekennzeichnet durch die Anwendung an einer Registeranlegetrommel (20) einer Bogendruckmaschine, wobei
auf einer gestellfesten Kurvenscheibe (5) ein auf
der drehenden Registeranlegetrommel (20) angeordneter Rollenhebel (7) abrollt und dessen Bewegung
eine Aufnahme- und Übergabebewegung einer Greiferbrücke (23) zur Beförderung eines zu bedruckenden Materials und/oder eine Schließ- und
Öffnerbewegung von Greifern (25) bewirkt und eine weitere mit der Trommel (20) rotierende Kurvenscheibe (8) angeordnet ist, auf welcher ein weiterer
Steuerhebel (10) mit Rolle (9) abrollt, der zur
Drehmomentenkompensation   von einer an einem
Gestell (1) sich abstützenden Feder (11) belastet ist.

**Claims**

1. Transmission system for forming cyclical motion from rotational motion including a rotating part
(2), at least one control lever (7) set into cyclical motion by rotational motion and cooperating positively
or non-positively with the rotating part (2), a nonuniform force acting on the control lever (7) and
producing a torque fluctuation in the rotational motion, characterized in that a cam disk (5) is disposed
at the rotating part (2) and that the control lever (7)
with roller (6) is in spring-loaded rolling contact with
the cam disk (5) and that, in order to compensate for
the torque fluctuations, a further cam disk (8) on
which rolls a further control lever (10) with a roller
(9) is disposed at the rotating part (2) or at the further part, applying a force to the roller (9) by means
of a spring (11), the cam shape of the second cam disk (8) being selected, in view of the cam shape of the first cam disk (5), such that the torques acting on the rotating part (2) are opposite in phase.

2. Transmission system according to Claim 1, characterized in that the spring (11) is provided to compensate for the torque fluctuations resulting from a non-uniformly acting force and, for a given rotational speed range, from the non-uniformly moved masses.

3. Transmission system according to Claim 1 or 2, characterized by its application on a register feed drum (20) of a sheet-fed printing machine, a roller lever (7) being disposed on the rotating register feed drum (20) and rolling on a cam disk (5) which is fixed to the machine frame, the motion of the roller lever (7) producing take-up and transfer motions of a gripper bridge (23) for conveying a material to be printed and/or producing closing and opening motions of grippers (25), a further cam disk (8) being disposed at the register feed drum (20) for rotation therewith, a further control lever (10) with roller (9) rolling on the further cam disk (8) and being spring-loaded by a spring (11), braced against a frame (1), to compensate for torque fluctuations.

**Revendications** .

1. Transmission pour créer un mouvement de va-et-vient cyclique à partir d'un mouvement de rotation, se composant d'une partie tournante (2), au moins un levier de commande (7) mis en mouvement cyclique par le mouvement de rotation et qui coopère avec conjugaison de forces ou de formes avec la partie tournante (2), le levier de commande (7) étant sollicité par une force non uniforme qui produit une variation de couple dans le mouvement de rotation, caractérisée en ce qu'il est prévu sur la partie tournante (2) un disque formant came (5), et le levier de commande (7) pourvu d'un galet (6) et sollicité élastiquement effectue un mouvement de roulement sur le disque formant came (5), il est prévu, pour une compensation des variations de couples, un autre disque formant came (8) sur la partie tournante (2) ou sur l'autre et sur lequel roule un autre levier de commande (10) à l'aide d'un galet (9), qui est sollicité au moyen d'un ressort (11) par une force, la forme de came du second disque formant came (8) étant choisie par rapport à la forme de came du premier disque formant came (5) de telle sorte que les couples agissant sur la partie tournante (2) soient en opposition de phases.

2. Transmission selon la revendication 1, caractérisée en ce que le ressort (1) est prévu pour assurer une compensation des variations de couples en fonction de la force agissant de façon non-uniforme pour une plage déterminée de vitesses de rotation en fonction des masses déplacées de façon non-uniforme.

3. Transmission selon une des revendications 1 ou 2, caractérisée par son utilisation avec un tambour (20) d'application de repères dans une machine d'impression de feuilles, auquel cas sur un disque formant came (5) solidaire du bâti roule un levier porte-galet (7), monté sur le tambour rotatif (20) d'application de repères et dont le mouvement produit un mouvement de réception et de transfert d'un support de pinces (23) pour le transport d'une matière à imprimer et/ou un mouvement d'ouverture et de fermeture de pinces (25), tandis qu'il est prévu un autre disque formant came (8) tournant avec le tambour (20) et sur lequel roule un autre levier de commande (10) pourvu d'un galet (9) et qui est sollicité, en vue d'une compensation de couples, par un ressort (11) s'appuyant contre un bâti (1).

EP 0 254 897 B1

Fig. 1

Fig. 2

Fig. 3

EP 0 254 897 B1

Fig. 4